# EUROPÄISCHE PATENTSCHRIFT

(11) **EP 1 192 042 B1**
(45) Veröffentlichungstag und Bekanntmachung des Hinweises auf die Patenterteilung: **30.11.2005**
(21) Anmeldenummer: 00938773.9
(22) Anmeldetag: 07.06.2000
(51) Int. Cl.: B32B 17/10, E06B 3/54, C03C 27/12

(54) **VERBUNDSCHEIBENANORDNUNG**
LAMINATED GLASS SYSTEM
SYSTEME DE PANNEAU DE VERRE FEUILLETE

(30) Priorität: 11.06.1999 DE 19926720; 09.05.2000 DE 10022446
(43) Veröffentlichungstag der Anmeldung: 03.04.2002
(73) Patentinhaber: Werner Sobek Ingenieure GmbH & Co. KG, 70597 Stuttgart (DE)
(72) Erfinder: SOBEK, Werner, D-70180 Stuttgart (DE)
(74) Vertreter: Fuhlendorf, Jörn
(86) Internationale Anmeldenummer: PCT/EP2000/005270
(87) Internationale Veröffentlichungsnummer: WO 2000/076763

(56) Entgegenhaltungen:
- EP-A- 0 238 301
- EP-A- 0 525 690
- EP-A- 0 783 961
- DE-A- 2 914 233
- GB-A- 1 600 867

## Beschreibung

Die vorliegende Erfindung bezieht sich auf eine Verbundscheibenanordnung nach dem Oberbegriff des Anspruchs 1.

Bei derartigen Verbundscheibenanordungen, wie Verbundsicherheitsgläser, besteht nach eingetretenem Bruch der Scheibe eine sogenannte "Resttragfähigkeit", die für den Einsatz von derartigen Scheiben, wie bei Verglasungen im Überkopfbereich, bei begehbaren und bei absturzsichernden Verglasungen zwingend erforderlich ist. Die Größe der Resttragfähigkeit ist durch zahlreiche Faktoren beeinflußbar und somit schwierig abzuschätzen. Zu diesen Faktoren zählen die Art der verwendeten Scheibenmaterialien, bei Verbundscheibenanordnungen die Geometrie des Schichtaufbaus, die Art der Zwischenschicht usw., ferner die Art der Lasteintragung, die Umgebungstempertur sowie das Bruchbild der Schädigung. Bei ungünstiger Wahl dieser Faktoren besteht oft die Gefahr, dass die Restfähigkeit der Verbundscheibenanordnung nicht oder nicht mehr ausreichend ist.

Nach dem derzeitigen Stand der Technik wird für Überkopfverglasungen, begehbare und absturzsichernde Glasscheibenanordnungen neben den Tragfähigkeitsnachweisen auch ein Nachweis der Resttragfähigkeit notwendig, der immer auf das jeweilige Bauteil und die dort erforderlichen Sicherheitsanforderungen abgestimmt werden muß. Der Nachweis der Resttragfähigkeit kann jedoch derzeit nur experimentell, d. h. auf Versuche an Originalbauteilen gemäß den Anforderungen der Bauaufsicht erbracht werden, wobei im allgemeinen eine oder mehrere Scheiben des zu untersuchenden Aufbaus zerstört werden und die Zeit bis zum vollständigen Versagen der Scheibe gemessen werden muß. Vollständiges Versagen heißt auch, dass die Scheibe ganz oder teilweise von ihrer Tragkonstruktion freikommt und abfällt.

Bekannt ist es, bei Verbundscheibenanordnungen die Resttragfähigkeit allein durch eine homogene Zwischenschicht, beispielsweise aus Polyvinylutyral (PVB) zu erreichen, wobei diese Resttragfähigkeit je nach Bruchbild und Festigkeit der Zwischenschicht entsprechend niedrig ist. Die bisher verwendeten PVB-Schichten gewährleisten bei bestimmten Verbundscheibenanordnungen keine ausreichende Resttragfähigkeit, da PVB ein extrem kriechfähiger thermoplastischer Kunststoff ist und somit seine Werkstoffeigenschaften stark temperaturabhängig sind. Demzufolge ist PV3 bei Raumtemperatur relativ dehnweich und entzieht sich daher der Aufnahme von Zugkräften. Bekannt sind auch Gießharzverbunde, die schallschutztechnisch günstiger als PVB sind, jedoch besitzen diese praktisch keine oder kaum eine Resttragfähigkeit, so dass solche Verbundscheibenanordnungen keine Sicherheit bieten.

Die EP 0 525 690 offenbart eine Verbundscheibe mit zwei Einzelscheiben, die über eine organische Verbindungsschicht miteinander verbunden sind. Diese Verbundscheibe besitzt randseitig Halteelemente, die einen Ends in der organischen Verbindungsschicht gehalten sind und die anderen Ends der Befestigung der Verbundscheibe an einem Träger dienen. Diese Halteelemente sind ausschließlich randseitig vorgesehen, so dass auch bei dieser bekannten Verbundscheibe nicht von einer erhöhten Resttragfähigkeit gesprochen werden kann.

Die Bauteilversuche, die im Rahmen einer Zulassung der Konstruktion einer Verbundscheibenanordnung durch die Bauaufsicht oft erforderlich sind, stellen für den Bauherrn eine nicht tragbare finanzielle Belastung dar.

Aus der EP 0 783 961 A1 ist zwar eine Verbundscheibenanordnung bekannt, in deren Kunststoffzwischenschicht ein Blech oder dergleichen eingefügt ist, jedoch ist dort lediglich ausgeführt, dass diese Maßnahme gegen übermäßige Sonneneinstrahlung und/oder gegen mechanische Beanspruchungen und/oder zur Brandsicherheit dienen soll; auch soll ein Faraday scher Käfig erzeugt werden. Die Frage der Resttragfähigkeit bei Bruch ist in dieser Schrift nicht erwähnt; auch ist die Art und Weise der Befestigung einer derartigen Verbundscheibenanordnung nicht beschreiben.

Aus der DE 298 09 607 Ul ist ferner eine Verbundscheibenanordnung bekannt geworden, bei der in der Zwischenschicht aus Kunstharz sogenannte Fremdmaterialien eingebettet sind. Diese Ausgestaltung der Verbundscheibenanordnung dient ausschließlich dekorativen Zwecken, um die dekorativen Gestaltungsmöglichkeiten solcher Verbundscheibenanordnungen zu erweitern.

Desweiteren ist aus der DE 195 39 214 A1 eine Verbundscheibenanordnung der eingangs genannten Art bekannt geworden, die durch Einbetten von Kunststofffäden in die Kunststoffzwischenschicht zu einer erhöhten Brandsicherheit führen soll.

Aufgabe der vorliegenden Erfindung ist es deshalb, auch unter ungünstigen Randbedingungen eine erhöhte Resttragfähigkeit bei Verbundscheibenanordnungen der eingangs genannten Arten von vornherein zu gewährleisten und den vollständigen Bruch und damit Lösen aus der Tragkonstruktion zu vermeiden, so dass solchen Verbundscheibenanordnungen neue Anwendungsmöglichkeiten erschlossen werden können.

Zur Lösung dieser Aufgabe sind bei einer Verbundscheibenanordnung der eingangs genannten Arten die im Anspruch 1 angegebenen Merkmale vorgesehen.

Durch die erfindungsgemäßen Maßnahmen ergibt sich eine Erhöhung der Resttragfähigkeit um ein Vielfaches der bisherigen Werte. Die Resttragfähigkeit kann nunmehr rechnerisch erfaßt werden, so dass kostspielige Bauteilversuche so gut wie nicht mehr notwendig sind. Durch die mechanische Einspannung der Verbundscheibenanordnung in die Tragkonstruktion und ggf. zusätzlich durch die mechanische Kopplung des Bewehrungselementes mit der Tragkonstruktion nach Anspruch ist vermieden, dass sich die Scheibe von der Tragkonstruktion vollständig löst und zu Folgeschäden führt. Somit sind weitere Anwendungsgebiete für derartige Scheiben möglich, beispielsweise für den Überkopfbereich, als begehbares Glas oder als absturzsichernde Verglasung und auch für Einsätze als primärlastabtragende Bauteile. Als Werkstoffe kommen insbesondere Gläser, aber auch andere mineralisch gebundene Werkstoffe, wie Naturstein, Keramik, Porzellan und dergleichen allein oder in Kombination in Frage.

Vorteilhafte Ausgestaltungen der mechanischen Einspannung der Verbundscheibenanordnung in einer Tragkonstruktion ergeben sich durch Merkmale eines oder mehrerer der Ansprüche 3 bis 5. Wesentlich hierbei ist das Maß der Einspannung bezüglich der Längserstreckung der Verbundscheibenanordnung, das auch dann eine Verankerung der Verbundscheibenanordnung an dem betreffenden Rand in der Tragkonstruktion gewährleisten soll, wenn sich die Verbundscheibe aufgrund Bruch durchbiegt und dabei sich das Einspannmaß verringert. Dabei kann die Einspannung quer zur Längserstreckung der Verbundscheibe kontinuierlich über die gesamte Breite oder abschnittsweise vorgesehen sein. Ein ausreichend hoher Querdruck der Klemmkonstruktion ist dann gegeben, wenn die Einspannung der Verbundscheibe auch nach ihrem Bruch gewährleistet ist.

Die mechanische Kopplung des Bewehrungselementes mit der Tragkonstruktion kann gemäß den Merkmalen des Anspruchs 6 innerhalb der Scheibe oder gemäß den Merkmalen des Anspruchs 7 randseitig außerhalb der Scheibe vorgesehen sein. Welche dieser beiden Arten vorteilhaft zu verwenden ist, hängt insbesondere auch von der Art der Tragkonstruktion ab, d. h., ob es sich beispielsweise um einzelne Bolzen oder um eine rahmenartige Tragkonstruktion handelt.

Mit den Merkmalen gemäß Anspruch 8 ist eine gleichmäßigere Tragfähigkeit über die gesamte Scheibenfläche unabhängig von deren Einbau- und Abstützlage gegeben.

Für das Bewehrungselement können verschiedene Werkstoffe in unterschiedlichen Formen eingesetzt werden, wie dies aus den Merkmalen gemäß einem oder mehreren der Ansprüche 9 oder 10 bzw. 11 bis 17 hervorgeht. Je nach Art und Ausgestaltung des Bewehrungselementes ergeben sich unterschiedliche Möglichkeiten der mechanischen Kopplung mit der Tragkonstruktion. Beispielsweise sind schlaufenartige Verbindungen, aber auch gelötete Verbindungen und dergleichen mit der Tragkonstruktion möglich. Je nach Materialart und Einlegeform ergeben sich zusätzliche Vorteile, wie beispielsweise eine Verminderung der Lichttransmission zum zusätzlichen Erreichen einer Sonnenschutzwirkung bei Gläsern. Ebenfalls bei Gläsen kann das Bewehrungselement im Sinne eines Vorhanges dem Sichtschutz dienen. Des weiteren ist es möglich, die von Gießharzverbunden bekannten Schalldämmeigenschaften nun auch für den Sicherheitsbereich zu nutzen.

Vorteilhafte Maßnahmen beim Aufbau derartiger Verbundscheibenanordnungen ergeben sich aus den Merkmalen des Anspruchs 18 bzw. 19.

Besonders vorteilhafte Anwendungen ergeben sich aus den Merkmalen der Ansprüche 20 und/oder 21.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer, perspektivischer und teilweise abgebrochener Darstellung den Aufbau einer Verbundscheibe gemäß einem ersten Ausführungsbeispiel vorliegender Erfindung,
- Figuren 2A und 2B: der Figur 1 entsprechende Darstellungen, jedoch gemäß einem zweiten bzw. dritten Ausführungsbeispiel vorliegender Erfindung,
- Figur 3: eine der Figur 1 entsprechende Darstellung, jedoch gemäß einem vierten Ausführungsbeispiel vorliegender Erfindung,
- Figur 4: in schematischer, perspektivischer und auseinandergezogener Darstellung den Aufbau einer Verbundscheibe gemäß einem fünften Ausführungsbeispiel vorliegender Erfindung und
- Figuren 5A und 5B: Ausführungsbeispiele für die Verbindung der Verbundscheibe bzw. deren Bewehrungselemente mit einer Tragkonstruktion.

Die in der Zeichnung in mehreren Ausführungsbeispielen dargestellte Verbundscheibenanordnung 10, 110, 210, 310 bzw. 410, die infolge ihrer erhöhten Resttragfähigkeit als Verbundscheibensicherheitsanordnung zur Anwendung kommt und im Überkopfbereich und/oder als begehbare oder absturzsichernde (sowohl vertikal als auch horizontal) Anordnung einsetzbar ist, besitzt bei den dargestellten Ausführungsbeispielen einen Zweischeibenaufbau praktisch beliebiger Flächenabmessung. Wenn auch im folgenden anhand des dargestellten Ausführungsbeispieles von Glasscheiben die Rede ist, versteht es sich, dass die eingesetzten Scheiben auch aus einem anderen spröden Werkstoff sein können, wie Naturstein, Keramik, Porzellan und dergleichen. Der Aufbau einer derartigen Verbundscheibenanordnung kann durch Scheibenelemente gleichen Werkstoffes oder auch unterschiedlichen Werkstoffes vorgenommen sein. Außerdem sind Verbundscheibenanordnungen mit mehr als zwei Scheibenelementen möglich.

Gemäß der Zeichnung sind eine obere Glasscheibe 11 und eine untere Glasscheibe 12 gewünschter Flächenabmessung und jeweils gewünschter Dicke vorgesehen. Die Glasscheiben 11, 12 können aus Floatglas, ESG-Glas, TVG-Glas oder anderen veredelten Gläsern hergestellt sein. Zwischen den beiden Glasscheiben 11 und 12 ist eine adhäsive Zwischenschicht 14 vorgesehen, die beispielsweise aus einer Polyvinylbutyral (PVB)-Schicht hergestellt ist.

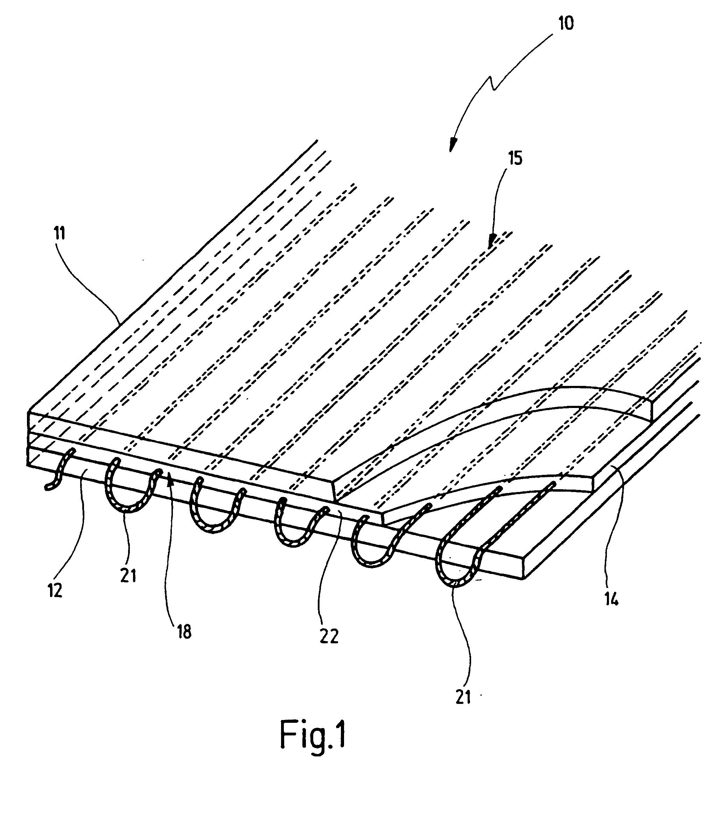

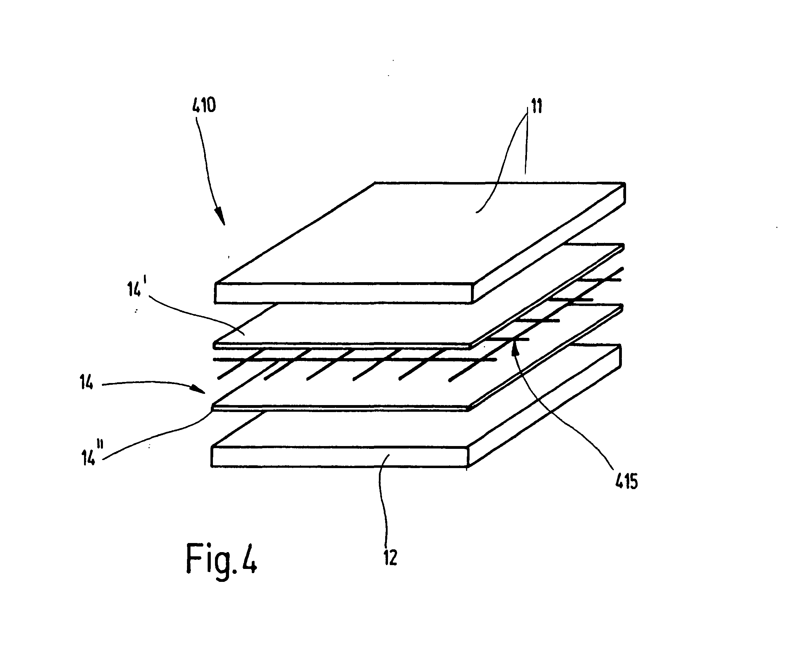

Gemäß den Ausführungsbeispielen der Figuren 1, 2A, 2B und 3 ist die Zwischenschicht 14 eine einheitliche Schicht, in die eine Bewehrung 15, 115, 215 bzw. 315 eingelegt ist. Gemäß dem Ausführungsbeispiel der Figur 4 ist die Zwischenschicht 14 aus einem der oberen Glasscheibe 11 benachbarten Schichtelement 14' und einem der unteren Glasscheibe 12 benachbarten Schichtelement 14'' zusammengesetzt. Zwischen den beiden Schichtelementen 14' und 14'' der Zwischenschicht 14 ist eine Bewehrung 415 eingelegt.

Die Bewehrung dient der Verstärkung bzw. Erhöhung der Tragsicherheit der Verbundscheibenanordnung 10, 110, 210, 310 bzw. 410 und ist im fertigen Zustand der Verbundscheibenanordnung gemäß den Figuren 1, 2A, 2B und 3 in die adhäsive Zwischenschicht 14 eingebettet. Als Werkstoffe für die Bewehrung 15, 115, 215, 315 sowie 415 kommen Glasfasern, Kohlefasern und Metalle in Frage. Entsprechend den dargestellten Ausführungsbeispielen ist die Einlegeform der Bewehrung 15,-115, 215, 315 bzw. 415 unterschiedlich. Gemäß Figur 4 ist die Bewehrung 415 beispielsweise ein Gitter aus einem der vorgenannten Werkstoffe, wobei das Gitter in geeigneter Weise beschichtet sein kann. Es versteht sich, dass sich als Einlegeform auch Gewebe, Bänder, Rovings, Garne, Schnüre, Zwirne, Fäden, Metallprofile oder auch dünne Bleche in vorgestanzter Form, wie Lochbleche, eignen.

Beim Ausführungsbeispiel der Figur 1 ist die Bewehrung 15 durch Schnüre gebildet, die in einer Richtung der Verbundscheibenanordnung 10 mäanderförmig verlaufen, wobei die durch die Mäanderform 18 bewirkten Schlaufen 21 aus den beiden einander gegenüberliegenden Rändern 22 der Scheibe 10 herausgeführt sind.

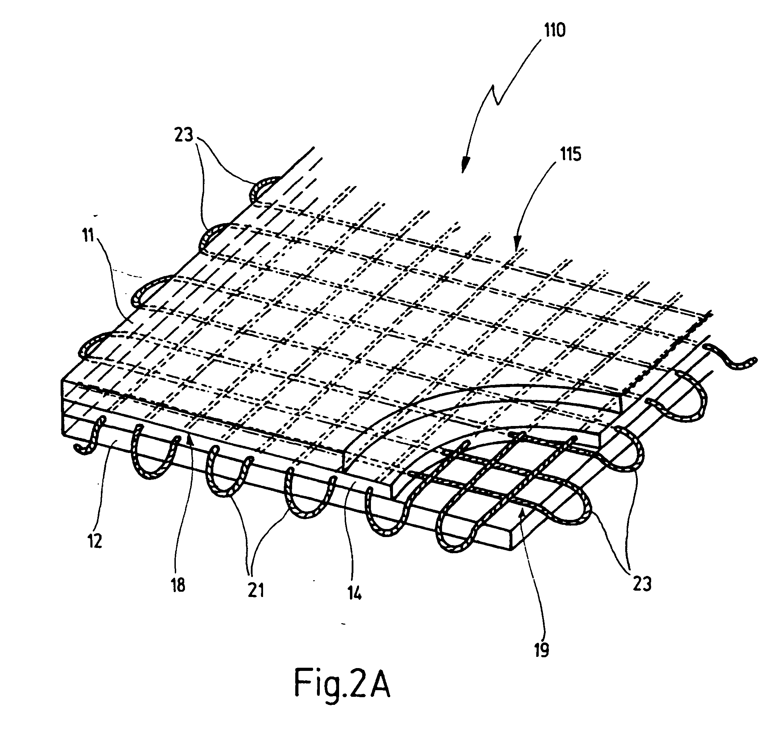

Beim Ausführungsbeispiel der Figur 2A ist die Bewehrung 115 durch zwei senkrecht zueinander angeordnete Mäander 18 und 19 gebildet, deren durch die jeweilige Mäanderform entstehenden Schlaufen 21 und 23 aus den betreffenden Rändern 22 und 24 der Verbundscheibe 110 herausgeführt sind.

Es versteht sich, dass bei diesen beiden Ausführungsbeispielen die Bewehrungsschnüre 15, 115 zur Bildung der Schlaufen 21, 23 auch jeweils als einzelnes längliches Oval eingelegt sein können.

Die herausgeführten Schlaufen 21 bzw. 21 und 23 der Bewehrung 15 bzw. 115 sind in nicht dargestellter Weise mit einer hier ebenfalls nicht dargestellten Tragkonstruktion der Verbundscheibe 10 bzw. 110 mechanisch gekoppelt bzw. verbunden. Ist beispielsweise die am Gebäude befestigte Tragkonstruktion durch parallele Schienen oder durch einen Rahmen gebildet, so können die herausgeführten Schlaufen 21 bzw. 21 und 23 zwischen die Schienen bzw. zwischen den Rahmen eingeklemmt, lötend verbunden oder dergleichen fixiert werden. Ist beispielsweise die Tragkonstruktion durch einzelne Bolzen gebildet, so können die Schlaufen 21, 23 in die Tragbolzen eingehängt und auf materialgerechte Weise fixiert werden.

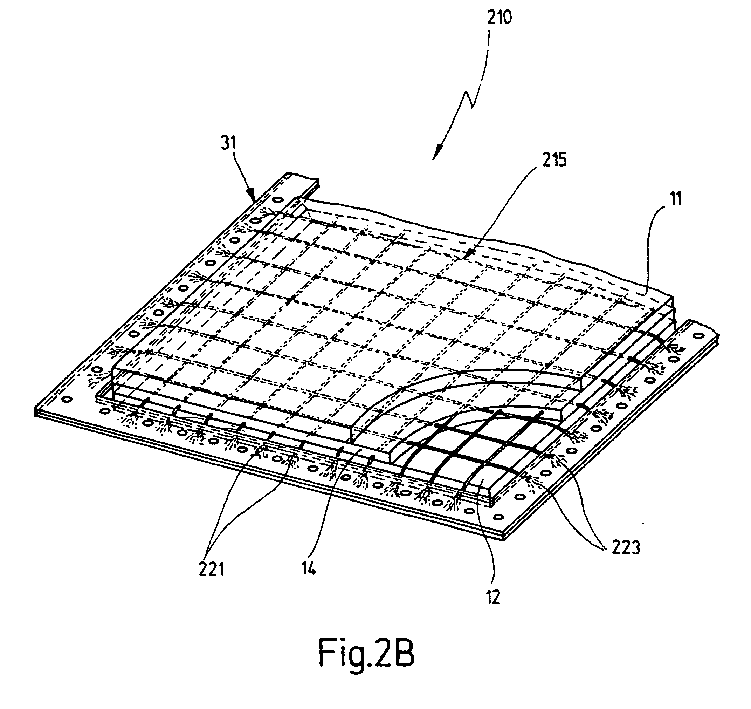

Beim Ausführungsbeispiel der Figur 2B ist die Bewehrung 215 durch ein Gitter aus zueinander senkrecht verlaufenden und untereinander parallelen langgestreckten Bändern, Fasern, Litzen, Drähten oder dgl. gebildet, deren freie Enden 221, 223 aus den betreffenden Rändern 222 und 224 der Verbundscheibe 210 herausgeführt sind. Beim dargestellten Ausführungsbeispiel sind diese langgestreckten Bewehrungselemente als Litzen oder dgl. dargestellt, deren aus der Verbundscheibe 210 herausgeführten Enden 221 und 223 aufgezwirnt sind. In Figur 2B ist außerdem eine Tragkonstruktion in Form eines nur teilweise dargestellten Rahmens 31 ersichtlich, auf dem die aufgezwirnten Enden 221, 223 bspw. festgelötet sind.

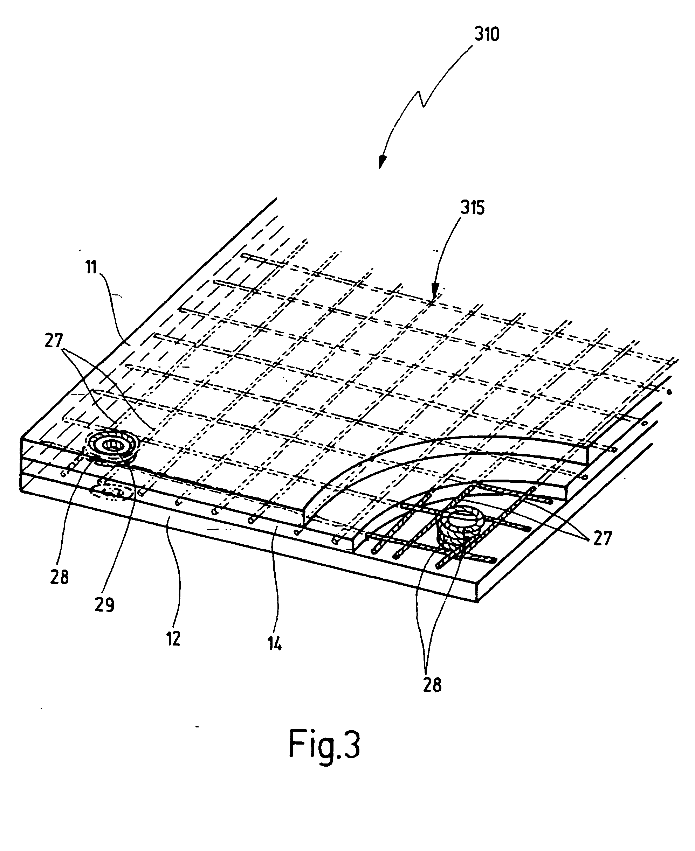

Bei dem in Figur 3 dargestellten Ausführungsbeispiel ist die Bewehrung 315 ebenfalls durch beispielsweise Drähte, Litzen, Schnüre, Bänder oder dgl. gebildet, die in einer Richtung oder, wie hier dargestellt, kreuzweise parallel zueinander in einem bestimmten Abstand verlaufen. In bestimmten Bereichen, bspw. den Ecken nahen Bereichen der Verbundscheibe 310, sind jeweils zwei parallel verlaufende Stränge 27 der Schnüre über aufeinanderliegende wendelförmige Wicklungen 28 in ihrer Parallelität unterbrochen und dann weiter geführt. Diese wendelförmigen Wicklungen 28 umgeben eine die Verbundscheibe 310 durchdringende Bohrung 29. Die Bohrungen 29 dienen in nicht dargestellter Weise der Aufnahme einer ebenfalls nicht dargestellten beispielsweise von einer Gebäudewand abstehenden Tragkonstruktion, wobei in geeigneter Weise die wendelförmigen Wicklungen 28 der Stränge 27 der Schnüre der bewehrung 315 mit der betreffenden Tragkonstruktion, beispielsweise Stehbolzen, verbunden werden. Es versteht sich, dass diese mechanischen Kopplungsbereiche 28, 29, die bei diesem Ausführungsbeispiel innerhalb der Fläche der Verbundscheibe 310 sind, an beliebig ausgewählten Bereichen der Verbundscheibe 310 vorgesehen sein können. Die übrigen Stränge 27' der Schnüre der Bewehrung 315 sind an ihren Enden randseitig der Verbundscheibe 310 abgeschnitten.

Durch die mechanische Kopplung der Bewehrung 15, 115, 215 bzw. 315 mit der nur teilweise dargestellten Trag- bzw. Unterkonstruktion (bspw. 31) der Verbundscheibe 10, 110, 210 bzw. 310 ist vermieden, dass sich die Scheibe bei Bruch aus ihrer Tragkonstruktion löst und Folgeschäden anrichtet.

Es versteht sich, dass in nicht dargestellter Weise auch bei der Verbundscheibe 410 nach Figur 4 eine entsprechende mechanische Kopplung der Bewehrung 415 vorgesehen ist.

Es versteht sich, dass die mechanische Kopplung von Bewehrung und Tragkonstruktion der Scheibe je nach Art der Bewehrung unterschiedlich ausfallen, beispielsweise eine Umschlingungsanbindung, eine Klemmverbindung, eine Lötverbindung oder dergleichen vorgesehen sein kann. Die Art der Tragkonstruktion führt zu einer mechanischen Kopplung entweder innerhalb oder außerhalb der Scheibe.

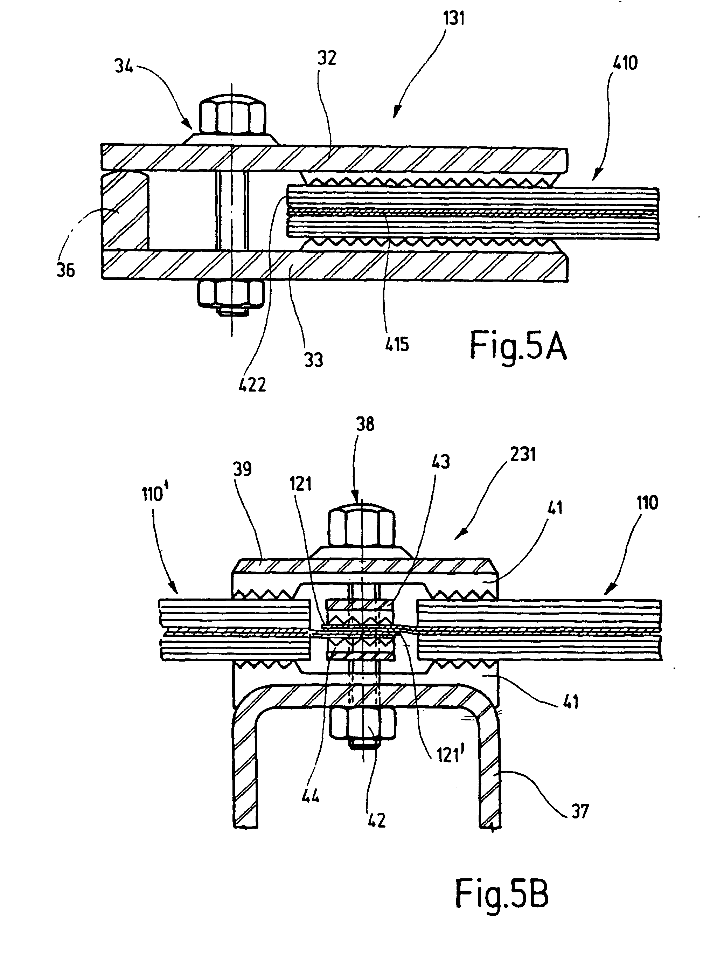

Die Figuren 5A und 5B zeigen Ausführungsbeispiele für die Verbindung einer Verbundscheibenanordnung 10, 110, 210, 310, 410 mit einer hier beispielhaft dargestellten Tragkonstruktion 131 bzw. 231.

Figur 5A zeigt eine Tragkonstruktion 131 in Form zweier paralleler biegesteifer Platten 32 und 33, die bspw. über die Länge eines Randes einer Verbundscheibenanordnung 410 kontinuierlich vorgesehen sind. Der betreffende Rand 422 der Verbundscheibenanordnung, an dem die Bewehrungselemente 415 nicht herausgeführt sind, ist über ein bestimmtes Maß der Längserstreckung der Verbundscheibe 410 zwischen die Platten 32 und 33 geschoben, die eine Klemmkonstruktion 34 aufweisen, so dass auf die eingebrachte Verbundscheibe bzw. deren Randbereich ein relativ hoher Querdruck zum Klemmen aufgebracht werden kann. Hierzu sind die Platten 32 und 33 der Verbundscheibe zugewandt mit Klemmbacken 35 und auf der diesen abgewandten Seite der Klemmschraubeneinheit 34 mit einem Abstandhalter 36 versehen. Die Verbundscheibenanordnung 410 ist damit einseitig im Träger 33 der Tragkonstruktion 131 eingespannt. Das Maß der Einspannzone zwischen den Platten 32 und 33 ist derart, dass bei einem Bruch der Verbundscheibenanordnung 410 noch eine ausreichende Klemmung gewährleistet ist.

Figur 5B zeigt eine Tragkonstruktion 231, in der zwei einander benachbarte Verbundscheibenanordnungen 110 und 110' eingespannt und zusammengehalten sind, wobei neben der Klemmung der Verbundscheibenränder gleichzeitig eine mechanische Kopplung der Bewehrungselemente an der Tragkonstruktion 231 erreicht ist.

Die Tragkonstruktion 231 besitzt beim dargestellten Ausführungsbeispiel einen brückenartigen Träger 37 und einen im Abstand angeordneten Flachträger 39, die mittels einer Schraubverbindung 38 aufeinander zu bewegt werden können. Zwischen den beiden Trägern 36 und 37 können die betreffenden Ränder benachbarter Verbundscheiben 110, 110' eingespannt bzw. eingeklemmt werden. Dabei besitzen die Träger 37 und 39 zahnartige Klemmbacken 41, mit denen durch Anziehen der Schraubverbindung 38 die entsprechende hohe Klemmkraft aufgebracht werden kann. Der Bolzen 42 der Schraubverbindung 38 dient gleichzeitig als Kopplungselement zur mechanischen Kopplung der aus den Rändern der Verbundscheibenanordnungen 110, 110' herausgeführten Schlaufen 121, 121' des Bewehrungselementes 115. Dabei sind die Schlaufen 121, 121' bspw. zwischen mit der Schraubverbindung 38 verbundenen Klemmscheiben bzw. backen 43, 44 gehalten.

Es versteht sich, dass die in Figur 5B dargestellte Verbindung der Verbundscheibenanordnung 110 mit einer Tragkonstruktion 231 auch mit einer Tragkonstruktion 131 nach Figur 5A an der gegenüberliegenden Seite kombiniert werden kann. Bei einer derartigen zweiseitigen Einspannung der Verbundscheibenanordnung ist erreicht, dass auch bei einem Bruch der Verbundscheibe und nachfolgendem Durchhängen der Verbundscheibe die beidseitige Klemmung zusammen mit der mechanischen Kopplung der Bewehrungselemente an der einen Tragkonstruktion ein Halten der Verbundscheibenanordnung gewährleistet.

Gemäß Figur 4 ist die Verbundscheibenanordnung 410 in der Weise hergestellt, dass nach dem Aufeinanderlegen der Teile 11, 12 und 14', 15"', 14'' durch Anwendung von Wärme und Druck die Bewehrung 415 in die Zwischenschicht 14 eingebettet wird und die Verklebung der beiden Glasscheiben 11 und 12 über die Zwischenschicht 14 erfolgt.

Bei einem nicht dargestellten Ausführungsbeispiel wird die Bewehrung 15 zwischen die obere Glasscheibe 11 und die untere Glasscheibe 12 gebracht, wobei die beiden Scheibenelemente auf Abstand gehalten und randseitig abgedichtet sind. Durch eine Öffnung wird der von den beiden Scheibenelementen 11 und 12 begrenzte Innenraum mit einem Gießharz, einem geeigneten Kunststoff oder dergleichen vergossen, wobei die Bewehrung in den Gießharz- oder Kunststoffverguß eingebettet wird.

Wie erwähnt, kann in entsprechender Weise eine Verbundscheibenanordnung auch aus anderen Materialien als Glas bei jeweils gleichem oder unterschiedlichem Material hergestellt werden. Des weiteren ist es möglich, eine Verbundscheibenanordnung in entsprechender Weise aus mehr als zwei Scheiben herzustellen.

Je nach Art des Materials der Scheibe ist die adhäsive Zwischenschicht 14 ausgebildet bzw. gewählt. Sind als Scheiben Glasscheiben gewählt, ist es zweckmäßig, die Zwischenschicht transparent auszuführen. Entsprechendes gilt für die verwendeten Werkstoffe für die Bewehrung, die bei der Verwendung von Glasscheiben bei der Verbundscheibenanordnung gleichzeitig die Möglichkeit einer Verminderung der Lichttransmission, Sichtschutzfunktion oder auch bestimmte Designfunktionen besitzt. Bei der Verwendung von Gießharz als Zwischenschicht ergibt sich eine bisher noch nicht erreichte Kombination von Schallschutz und ausreichender Resttragfähigkeit.

## Patentansprüche

1. Verbundacheibenanordnung (10, 110, 210, 310, 410) aus mindestens zwei Scheibenelementen (11, 12) aus gleichen oder unterschiedlichen spröden Werkstoffen, insbesondere Glas, wobei die Scheibenelemente (11, 12) durch eine Zwischenschicht (14) aus einem adhäsiven Kunststoff flächig miteinander verbunden sind, in welche Zwischenschicht ein Bewehrungselement (15, 115, 215, 315, 415) eingebettet ist, **dadurch gekennzeichnet, dass** die mit dem Bewehrungselement versehene Verbundscheibenanordnung (10, 110, 210, 310, 410) an einer Tragkonstruktion (31, 131, 231) mechanisch eingespannt ist.

2. Verbundscheibenanordnung nach Anspruch 1, **dadurch gekennzeichnet, dass** das Bewehrungselement (15, 115, 215, 315, 415) an der Tragkonstruktion (31, 131, 231) mechanisch gekoppelt gehalten ist.

3. verbundscheibenanordnung nach Anspruch 1 oder 2, **dadurch gekennzeichnet, dass** eine biegesteife Einspannvorrichtung (33) vorgesehen ist, deren die Verbundscheibenanordnung umgreifende Einspannzone eine Abmessung aufweist, die auch bei Bruch der Verbundscheibenanordnung eine Bewehrungsverankerung gewährleistet.

4. Verbundscheibenanordnung nach mindestens einem der Ansprüche 1 bis 3, **dadurch gekennzeichnet, dass** die Einspannvorrichtung längs eines Randes der Verbundscheibenanordnung kontinuierlich oder abschnittsweise vorgesehen ist.

5. Verbundscheibenanordnung nach mindestens einem der Ansprüche 1 bis 4, **dadurch gekennzeichnet, dass** die Einspannvorrichtung als Klemmkonstruktion mit hohem Querdruck vorgesehen ist.

6. Verbundscheibenanordnung nach mindestens einem der Ansprüche 1 bis 5, **dadurch gekennzeichnet, dass** das Bewehrungselement (15) innerhalb der Scheibe (10) mit der Tragkonstruktion verbunden ist.

7. Verbundscheibenanordnung nach mindestens einem der Ansprüche 1 bis 5, **dadurch gekennzeichnet, dass** das Bewehrungselement (15) an mindestens einem Scheibenrand aus der Scheibe (10) herausgeführt und außenrandseitig mit der Tragkonstruktion verbunden ist.

8. Verbundscheibenanordnung nach mindestens einem der Ansprüche 1 bis 7, **dadurch gekennzeichnet, dass** das Bewehrungselement (15) ganzflächig über die Scheibe (11, 12) vorgesehen ist.

9. Verbundscheibenanordnung nach mindestens einem der Ansprüche 1 bis 8, **dadurch gekennzeichnet, dass** das Bewehrungselement (15) aus Glas- oder Kohlefasern ist.

10. Verbundscheibenanordnung nach mindestens einem der Ansprüche 1 bis 8, **dadurch gekennzeichnet, dass** das Bewehrungselement (15) aus Metall ist.

11. Verbundscheibenanordnung nach mindestens einem der Ansprüche 1 bis 10, **dadurch gekennzeichnet, dass** das Bewehrungselement (15) durch ein Gewebe gebildet ist.

12. Verbundscheibenanordnung nach mindestens einem der Ansprüche 1 bis 10, **dadurch gekennzeichnet, dass** das Bewehrungselement (15) ein Gitter ist.

13. Verbundscheibenanordnung nach mindestens einem der Ansprüche 1 bis 8, **dadurch gekennzeichnet, dass** das Bewehrungselement (15) durch Bänder, Rovings, Garne, Schnüre, Zwirne, Fäden oder dergleichen gebildet ist.

14. Verbundscheibenanordnung nach Anspruch 13, **dadurch gekennzeichnet, dass** die Bänder, Rovings, Garne, Schnüre, Zwirne, Fäden in einer oder zueinander senkrechten Richtungen mäanderförmig aus der Scheibe (11, 12) herausgeführt sind.

15. Verbundecheibenanordnung nach mindestens einem der Ansprüche 1 bis 10, **dadurch gekennzeichnet, dass** das Bewehrungelement (15) durch ein dünnes Blech gebildet ist.

16. Verbundscheibenanordnung nach Anspruch 15, **dadurch gekennzeichnet, dass** das dünne Blech mit Loch- oder dergleichen Stanzungen versehen ist, durch die die Tragkonstruktion geführt ist.

17. Verbundscheibenanordnung nach mindestens einem der Ansprüche 1 bis 10, **dadurch gekennzeichnet, dass** das Bewehrungselement (15) profiliert ist.

18. Verbundscheibenanordnung nach mindestens einem der Ansprüche 1 bis 16, **dadurch gekennzeichnet, dass** die Zwischenschicht (14) aus zwei Teilschichten (14', 14") besteht und dass das Bewehrungselement (15) zwischen die beiden Teilschichten (14', 14'') gelegt ist.

19. Verbundscheibenanordnung nach mindestens einem der Ansprüche 1 bis 16, **dadurch gekennzeichnet, dass** das Bewehrungselement (15) zwischen zwei auf Abstand gehaltene Scheibenelemente (11, 12) gelegt und unter Bildung der Zwischenschicht (14) vergossen ist.

20. Verbundecheibenanordnung nach mindestens einem der Ansprüche 1 bis 19, **dadurch gekennzeichnet, dass** sie als Überkopfverglasung ausgeführt ist.

21. Verbundscheibenanordnung nach mindestens einem der Ansprüche 1 bis 19, **dadurch gekennzeiehnet, dass** sie als begehbare oder absturzsichernde Verglasung ausgeführt ist.

## Claims

1. A composite panel system (10, 110, 210, 310, 410) comprising at least two panel elements (11, 12) of the same or different brittle materials, in particular glass, wherein the panel elements (11, 12) are joined superficially to one another by an intermediate layer (14) of an adhesive plastic, in which intermediate layer a reinforcing element (15, 115, 215, 315, 415) is embedded, **characterized in that** the composite panel system (10, 110, 210, 310, 410) provided with the reinforcing element is mechanically fastened to a support structure (31, 131, 231).

2. The composite panel system of claim 1, **characterized in that** the reinforcing element (15, 115, 215, 315, 415) is held mechanically coupled on the support structure (31, 131, 231).

3. The composite panel system of claim 1 or 2, **characterized in that** a rigid fastening device (33) is provided, whose fastening zone embracing the composite panel system has a size which even if the composite panel system breaks assures reinforcing anchoring.

4. The composite panel system of at least one of claims 1 to 3, **characterized in that** the fastening device is provided either continuously or intermittently along one edge of the composite panel system.

5. The composite panel system of at least one of claims 1 to 4, **characterized in that** the fastening device is provided in the form of a clamping construction with high transverse pressure.

6. The composite panel system of at least one of claims 1 to 5, **characterized in that** the reinforcing element (15) is connected inside the panel (10) to the support structure.

7. The composite panel system of at least one of claims 1 to 5, **characterized in that** the reinforcing element (15) on at least one edge of the panel extends out of the panel (10) and is connected on its outer periphery to the support structure.

8. The composite panel system of at least one of claims 1 to 7, **characterized in that** the reinforcing element (15) is provided over the entire surface of the panel (11, 12).

9. The composite panel system of at least one of claims 1 to 8, **characterized in that** the reinforcing element (15) is of glass fibers or carbon fibers.

10. The composite panel system of at least one of claims 1 to 8, **characterized in that** the reinforcing element (15) is of metal.

11. The composite panel system of at least one of claims 1 to 10, **characterized in that** the reinforcing element (15) is formed by a woven fabric.

12. The composite panel system of at least one of claims 1 to 10, **characterized in that** the reinforcing element (15) is a grid.

13. The composite panel system of at least one of claims 1 to 8, **characterized in that** the reinforcing element (15) is formed by ribbons, rovings, yarns, cords, twisted yarns, threads, or the like.

14. The composite panel system of claim 13, **characterized in that** the ribbons, ravings, yarns, cords, twisted yarns, or threads are extended out of the panel (11, 12) in one direction or in directions perpendicular to one another in a meander pattern.

15. The composite panel system of at least one of claims 1 to 10, **characterized in that** the reinforcing element (15) is formed by a thin metal sheet.

16. The composite panel system of claim 15, **characterized in that** the thin metal sheet is provided with perforations or similar stamped features, by which the support structure is guided.

17. The composite panel system of at least one of claims 1 to 10, **characterized in that** the reinforcing element (15) is profiled.

18. The composite panel system of at least one of claims 1 to 16, **characterized in that** the intermediate layer (14) comprises two partial layers (14', 14''), and that the reinforcing element (15) is placed between the two partial layers (14', 14'').

19. The composite panel system of at least one of claims 1 to 16, **characterized in that** the reinforcing element (15) is placed between two panel elements (11, 12) that are kept spaced apart and is potted, forming the intermediate layer (14).

20. The composite panel system of at least one of claims 1 to 19, **characterized in that** it is embodied as an overhead glazing.

21. The composite panel system of at least one of claims 1 to 19, **characterized in that** it is embodied as a glazing that can be walked on or that secures against collapse.

## Revendications

1. Système de panneau de verre feuilleté (10, 110, 210, 310, 410), composé d'au moins deux éléments de panneau (11,12) réalisés dans des matériaux cassants identiques ou différents, en particulier en verre, les éléments de panneau (11, 12) étant reliés entre eux sur toute leur surface par une couche intermédiaire (14) en matière plastique adhésive dans laquelle est encastré un élément d'armature (15, 115, 215, 315, 415), **caractérisé en ce que** le système de panneau de verre feuilleté (10, 110, 210, 310, 410) muni de l'élément d'armature est serré mécaniquement sur une structure porteuse (31, 131, 231).

2. Système de panneau de verre feuilleté selon la revendication 1, **caractérisé en ce que** l'élément d'armature (15, 115, 215, 315, 415) est maintenu accouplé mécaniquement sur la structure porteuse (31, 131, 231).

3. Système de panneau de verre feuilleté selon la revendication 1 ou 2, **caractérisé en ce qu'**il est prévu un dispositif de serrage résistant à la flexion (33), dont la zone de serrage entourant le système de panneau de verre feuilleté présente une dimension qui garantit un ancrage d'armature même en cas de rupture du système de panneau de verre feuilleté.

4. Système de panneau de verre feuilleté selon au moins l'une des revendications 1 à 3, **caractérisé en ce que** le dispositif de serrage est prévu le long d'un bord du système de panneau de verre feuilleté, en continu ou par segments.

5. Système de panneau de verre feuilleté selon au moins l'une des revendications 1 à 4, **caractérisé en ce que** le dispositif de serrage est prévu en tant que structure de serrage avec pression transversale élevée.

6. Système de panneau de verre feuilleté selon au moins l'une des revendications 1 à 5, **caractérisé en ce que** l'élément d'armature (15) est relié à la structure porteuse à l'intérieur du panneau (10).

7. Système de panneau de verre feuilleté selon au moins l'une des revendications 1 à 5, **caractérisé en ce que** l'élément d'armature (15) est guidé hors du panneau (10) sur au moins un bord de panneau et est relié à la structure porteuse du côté du bord extérieur.

8. Système de panneau de verre feuilleté selon au moins l'une des revendications 1 à 7, **caractérisé en ce que** l'élément d'armature (15) est prévu sur toute la surface du panneau (11, 12).

9. Système de panneau de verre feuilleté selon au moins l'une des revendications 1 à 8, **caractérisé en ce que** l'élément d'armature (15) est en fibres de verre ou de carbone.

10. Système de panneau de verre feuilleté selon au moins l'une des revendications 1 à 8, **caractérisé en ce que** l'élément d'armature (15) est en métal.

11. Système de panneau de verre feuilleté selon au moins l'une des revendications 1 à 10, **caractérisé en ce que** l'élément d'armature (15) est formé par un tissu.

12. Système de panneau de verre feuilleté selon au moins l'une des revendications 1 à 10, **caractérisé en ce que** l'élément d'armature (15) est une grille.

13. Système de panneau de verre feuilleté selon au moins l'une des revendications 1 à 8, **caractérisé en ce que** l'élément d'armature (15) est formé par des bandes, mèches ou stratifiés, fils, cordonnets, fils retors, fils simples ou analogues.

14. Système de panneau de verre feuilleté selon la revendication 13, **caractérisé en ce que** les bandes, mèches ou stratifiés, fils, cordonnets, fils retors, fils simples sont guidés hors du panneau (11, 12) en formant des méandres dans une direction ou des directions perpendiculaires entre elles.

15. Système de panneau de verre feuilleté selon au moins l'une des revendications 1 à 10, **caractérisé en ce que** l'élément d'armature (15) est formé par une tôle mince.

16. Système de panneau de verre feuilleté selon la revendication 15, **caractérisé en ce que** la tôle mince est munie de trous ou perçages similaires par lesquels la structure porteuse est guidée.

17. Système de panneau de verre feuilleté selon au moins l'une des revendications 1 à 10, **caractérisé en ce que** l'élément d'armature (15) est profilé.

18. Système de panneau de verre feuilleté selon au moins l'une des revendications 1 à 16, **caractérisé en ce que** la couche intermédiaire (14) est composée de deux couches partielles (14', 14'') et **en ce que** l'élément d'armature (15) est posé entre les deux couches partielles (14', 14").

19. Système de panneau de verre feuilleté selon au moins l'une des revendications 1 à 16, **caractérisé en ce que** l'élément d'armature (15) est posé entre deux éléments de panneau (11, 12) tenus à distance et est coulé en formant la couche intermédiaire (14).

20. Système de panneau de verre feuilleté selon au moins l'une des revendications 1 à 19, **caractérisé en ce qu'**il est réalisé sous la forme d'une verrière de plafond.

21. Système de panneau de verre feuilleté selon au moins l'une des revendications 1 à 19, **caractérisé en ce qu'**il est réalisé sous la forme d'une verrière sur laquelle on peut circuler ou qui résiste aux chutes.
